# NOUVEAU FASCICULE DE BREVET EUROPEEN

(11) **EP 1 106 795 B3**
(45) Date de publication du présent fascicule: **01.07.2015**
(45) Mention de la délivrance du brevet: 02.03.2005
(21) Numéro de dépôt: 00403402.1
(22) Date de dépôt: 05.12.2000
(51) Int. Cl.: F01M 11/03

(54) **Filtre à liquide à purge automatique pour moteur à combustion interne**
Flussigkeitsfilter mit automatischem Abflussventil für Brennkraftmaschine
Liquid filter with automatic purge for combustion engine

(30) Priorité: 07.12.1999 FR 9915398; 07.06.2000 FR 0007283
(43) Date de publication de la demande: 13.06.2001
(73) Titulaire: FILTRAUTO, 78180 Montigny le Bretonneux (FR)
(72) Inventeur: Lopez, Yann, 92370 Chaville (FR); Le Goff, Pascal, 78220 Viroflay (FR); Petra, Jean-Marc, 91400 Orsay (FR); Brisson, Marc, 93350 Le Bourget (FR)
(74) Mandataire: Cabinet Plasseraud

(56) Documents cités:
- EP-A- 0 839 563
- EP-A- 0 848 978
- DE-A- 3 344 568
- DE-A- 3 432 855
- DE-A- 4 411 279
- DE-A- 19 737 699
- DE-C- 19 612 689

## Description

La présente invention est relative aux filtres à liquide à purge automatique pour moteurs à combustion interne.

Plus particulièrement, l'invention concerne un filtre à liquide pour moteur à combustion interne, comportant :
- une embase qui présente un axe central,
- un couvercle adapté pour être fixé sur l'embase en délimitant avec celle-ci une chambre de filtration fermée,
- une entrée de liquide communiquant avec la chambre de filtration,
- une sortie de liquide communiquant avec la chambre de filtration,
- un élément filtrant amovible interposé de façon étanche entre l'entrée et la sortie de liquide, cet élément filtrant étant centré sur l'axe central de l'embase et présentant un puits central qui communique avec la sortie de liquide,
- un canal de purge qui est ménagé dans l'embase et qui s'étend vers le bas selon l'axe central,
- et un obturateur disposé sur l'axe central de l'embase et engagé dans le puits central de l'élément filtrant, cet obturateur étant adapté pour s'engager dans le canal de purge en fermant ce canal lorsque le couvercle est fermé avec l'insert filtrant dans la chambre de filtration, ledit obturateur coopérant avec l'insert filtrant de façon à ouvrir le canal de purge lorsque ledit insert filtrant est enlevé de la chambre de filtration.

Le document DE-A-34 09219 décrit un filtre à liquide de ce type, qui présente l'inconvénient d'avoir un insert filtrant complexe et coûteux. De plus, du fait de la longueur de l'obturateur lié à l'insert filtrant, l'enlèvement du couvercle et de l'insert filtrant nécessite un espace libre assez important au-dessus de l'embase, ce qui n'est pas toujours possible compte tenu de la disposition des différentes parties du moteur.

La présente invention a notamment pour but de pallier ces inconvénients.

A cet effet, selon l'invention, un filtre à liquide du genre en question est caractérisé en ce que l'obturateur est monté coulissant à mouvement perdu par rapport à l'embase entre une position basse où ledit obturateurferme le canal de purge et une position de butée haute où ledit obturateur ouvre le canal de purge en permettant la vidange de la chambre de filtration,
en ce que l'obturateur emboîté de façon amovible dans le puits central et l'insert filtrant coopère par butée avec l'obturateur pour maintenir cet obturateur en position basse lorsque le couvercle est fermé et que l'insert filtrant est dans la chambre de filtration,
et en ce que le filtre comporte en outre des moyens de dégagement pour relever l'obturateur en position haute lorsque l'insert filtrant est enlevé de la chambre de filtration.

Grâce à ces dispositions, l'obturateur reste en permanence dans l'embase et est donc réutilisable. La fonction de purge automatique de la chambre de filtration à l'enlèvement de l'insert filtrant est réalisée sans qu'il soit besoin de compliquer la structure de l'insert filtrant remplaçable, qui est ainsi peu coûteux.

De plus, l'enlèvement du couvercle lors du remplacement de l'insert filtrant demande relativement peu de place libre au-dessus de l'embase, puisque l'obturateur reste fixé dans l'embase au lieu d'être solidaire de l'insert filtrant.

Par ailleurs, la position centrale de l'obturateur simplifie le positionnement relatif entre l'insert filtrant et ledit obturateur lors du montage d'un nouvel insert filtrant. De plus, si le couvercle est vissé sur l'embase en risquant d'entraîner avec lui l'insert filtrant en rotation, la position centrale de l'obturateur simplifie grandement les problèmes de mouvements relatifs entre l'obturateur et l'insert filtrant.

Dans des modes de réalisation préférés de l'invention, on peut éventuellement avoir recours en outre à l'une et/ou à l**'**autre des dispositions suivantes :
- les moyens de dégagement comprennent un ressort qui est porté par l'embase et qui sollicite l'obturateur vers le haut, ce ressort étant adapté pour maintenir l'obturateur en position ouverte pendant que l'insert filtrant est enlevé de la chambre de filtration ;
- le ressort s'appuie sur une collerette rigide qui est fixée sur l'embase, cette collerette coopérant par butée avec l'obturateur pour définir la position de butée haute de cet obturateur ;
- les moyens de dégagement de l'obturateur comprennent un dispositif de fixation réversible qui relie l'obturateur à l'insert filtrant par emboîtement avec frottement ;
- le dispositif de fixation réversible est un dispositif de clipsage ;
- le dispositif de clipsage comporte au moins deux crochets de clipsage flexibles qui sont orientés radialement vers l'extérieur par rapport à l'axe central et qui sont adaptés pour coopérer par engagement mutuel avec au moins un relief annulaire formé dans un puits central ménagé dans l'insert filtrant ;
- l'obturateur comporte au moins un organe flexible s'étendant vers l'extérieur et adapté pour reposer sur un élément formant butée solidaire de l'embase de façon à maintenir l'obturateur en position ouverte pendant que l'insert filtrant est enlevé de la chambre de filtration, cet organe flexible étant adapté pour s'effacer élastiquement lors de son passage sur l'élément formant butée lorsque l'obturateur est déplacé entre ses positions haute et basse lors d'un montage ou d'un démontage de l'insert filtrant ;
- l'obturateur comporte au moins deux doigts élastiques de butée divergeant vers le haut chacun jusqu'à une extrémité libre coopérant par butée avec une collerette annulaire qui est solidaire de l'embase, pour définir la position de butée haute de l'obturateur ;
- l'obturateur comporte au moins deux doigts élastiques divergeant vers le bas chacun jusqu'à une extrémité libre dotée d'un crochet orienté radialement vers l'extérieur, ce crochet étant adapté pour coopérer par butée avec une collerette annulaire solidaire de l'embase pour définir la position de butée haute de l'obturateur ;
- les doigts élastiques sont situés au-dessous de la collerette lorsque l'obturateur est dans sa position basse, lesdits doigts élastiques étant adaptés pour fléchir radialement vers l'intérieur au contact de ladite collerette lorsque l'obturateur se déplace de sa position basse à sa position de butée haute ;
- l'obturateur se présente sous la forme d'une tige s'étendant entre d'une part, une extrémité inférieure formant bouchon qui est adaptée pour fermer le canal de purge et d'autre part, une extrémité haute qui coopère avec l'insert filtrant ;
- l'extrémité supérieure de l'obturateur est engagée dans un puits central qui est ménagé dans l'insert filtrant pour permettre la sortie de liquide filtré, et ledit obturateur traverse un conduit relié à la sortie de liquide avant de pénétrer dans le canal de purge : le conduit en question est donc mis à profit à la fois pour la sortie de liquide en fonctionnement normal et pour la vidange de la chambre de filtration lors du remplacement de l'insert filtrant;
- l'extrémité supérieure de l'obturateur forme une partie tubulaire qui est emboîtée avec étanchéité à la fois dans le puits central et dans le conduit relié à la sortie de liquide, cette partie tubulaire délimitant un passage de liquide qui fait communiquer ledit puits central avec ledit conduit ;
- la chambre de filtration est partiellement délimitée par un fond convergeant vers le bas jusqu'au conduit relié à la sortie de liquide ;
- le couvercle est vissé sur l'embase par rotation autour de l'axe central, la chambre de filtration et l'insert filtrant présentant chacun une forme générale circulaire de révolution centrée sur ledit axe central.

D'autres caractéristiques et avantages de l'invention apparaîtront au cours de la description suivante de trois de ses formes de réalisation, données à titre d'exemples non limitatifs, en regard des dessins joints.

Sur les dessins :
- la figure 1 est une vue en coupe verticale d'un filtre à liquide selon une première forme de réalisation de l'invention, en position d'utilisation,
- la figure 2 est une vue en coupe selon la ligne **II-II** de la figure 1,
- la figure 3 est une vue en perspective de l'obturateur du filtre des figures 1 et 2,
- la figure 4 est une vue de détail de la figure 1,
- les figures 5 et 6 sont respectivement des vues similaires aux figures 1 et 4, montrant l'embase du filtre lorsque le couvercle et l'insert filtrant sont enlevés,
- les figures 7 et 8 sont respectivement des vues similaires aux figures 1 et 4, dans une deuxième forme de réalisation de l'invention,
- et les figures 9 à 12 sont respectivement des vues similaires aux figures 1 à 4, pour une troisième formes de réalisation de l'invention.

Sur les différentes figures, les mêmes références désignent des éléments identiques ou similaires.

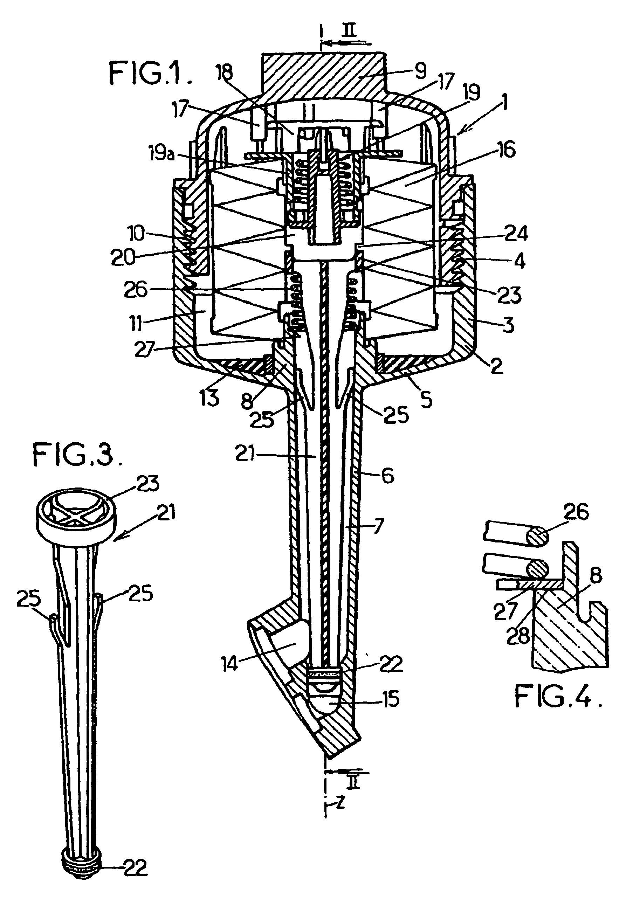

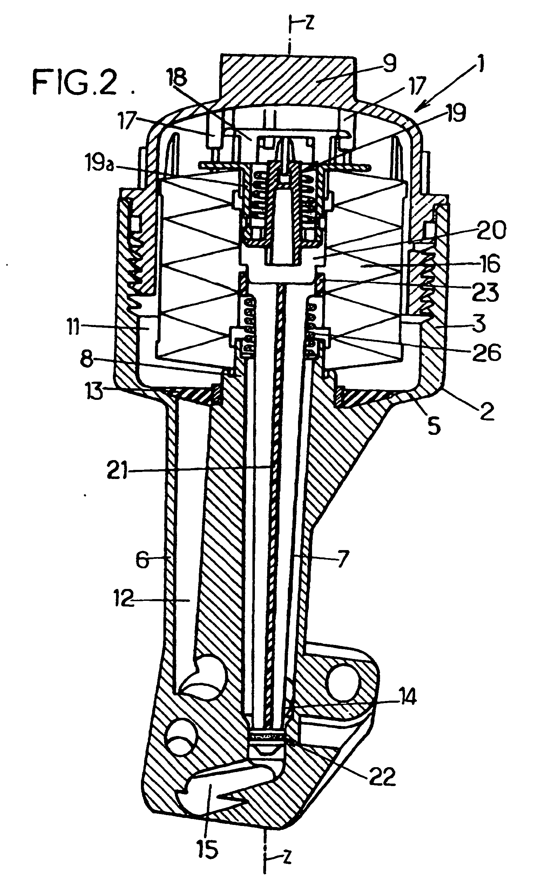

Les figures 1 et 2 représentent un filtre à liquide pour moteur à combustion interne, qui peut constituer en particulier un filtre à huile.

Ce filtre à liquide comporte une embase 2 qui forme une cuve cylindrique de révolution centrée sur un axe Z sensiblement vertical, cette cuve comportant :
- une paroi latérale annulaire 3 dotée d'un filetage interne 4,
- et un fond 5 qui est prolongé vers le bas par un appendice tubulaire inférieur 6 délimitant intérieurement un conduit de liquide 7, et le fond 5 se prolongeant également vers le haut, à l'intérieur de la cuve 2, par un embout tubulaire 8 qui forme extrémité supérieure du conduit de liquide 7.

À l'extrémité supérieure ouverte de la paroi latérale 3 est vissé un couvercle 9 qui comporte un filetage 10 complémentaire du filetage 4 de la cuve.

Lorsque le couvercle 9 et vissé sur l'embase 2, il délimite avec cette cuve une chambre de filtration 11 fermée, qui communique avec l'extérieur uniquement par l'intermédiaire ;
- d'une entrée de liquide de 12 (figure 2) qui débouche dans le fond 5 de la cuve, dans une position excentrée par rapport à l'axe Z et qui est recouverte par une membrane souple 13 formant clapet anti-retour,
- et le conduit de liquide 7 susmentionné, qui débouche latéralement vers une sortie de liquide 14 et qui communique en partie inférieure avec un canal de purge 15.

Par ailleurs, la chambre de filtration 11 contient un insert filtrant 16, réalisé à base de papier filtre ou autre, qui est emboîté de façon étanche sur l'embout tubulaire 8 de façon à être interposée entre l'entrée 12 et la sortie 14 de liquide.

Avantageusement, cet insert filtrant 16 est fixé de façon amovible sous le couvercle 9, par exemple au moyen de crochets de clipsage 17 qui coopèrent avec un pontet 18 solidaire de l'insert filtrant.

Ce pontet 18 peut appartenir par exemple à un clapet de by-pass 19 dont le corps annulaire 19a est engagé avec étanchéité dans un puits central 20 ménagé à l'intérieur de l'insert filtrant 16, lequel puits central est adapté pour recueillir le liquide filtré en sortie dudit insert filtrant.

Par ailleurs, le filtre comporte en outre un obturateur 21, avantageusement moulé en matière plastique, qui est bien visible sur la figure 3.

Cet obturateur 21 se présente sous la forme d'une tige à section cruciforme qui s'étend entre d'une part, une extrémité inférieure 22 formant un bouchon adapté pour obturer le canal de purge 15 en position d'utilisation du filtre, et d'autre part, une extrémité supérieure élargie formant une bague annulaire 23 emboîtée en partie inférieure du puits central 20 de l'insert filtrant, cette bague 23 étant placée en butée sous une collerette intérieure rigide 24 solidaire de l'insert filtrant. La collerette 24 de l'insert filtrant peut appartenir par exemple à une armature intérieure ajourée servant à renforcer l'insert filtrant.

De plus, l'obturateur 23 comporte, à une position intermédiaire entre ses deux extrémités, au moins deux doigts de butée 25 élastiques qui divergent vers le haut et qui sont engagés à l'intérieur du conduit de liquide 7.

Enfin, un ressort de compression 26 est inter-posé entre la bague 23 formant l'extrémité supérieure de l'obturateur 21 et une collerette rigide 27, métallique ou autre, qui est engagée à force dans l'embout tubulaire 8 de l'embase et qui repose sur un épaulement 28 de cet embout en faisant saillie à l'intérieur du conduit de liquide 7 (voir figure 4).

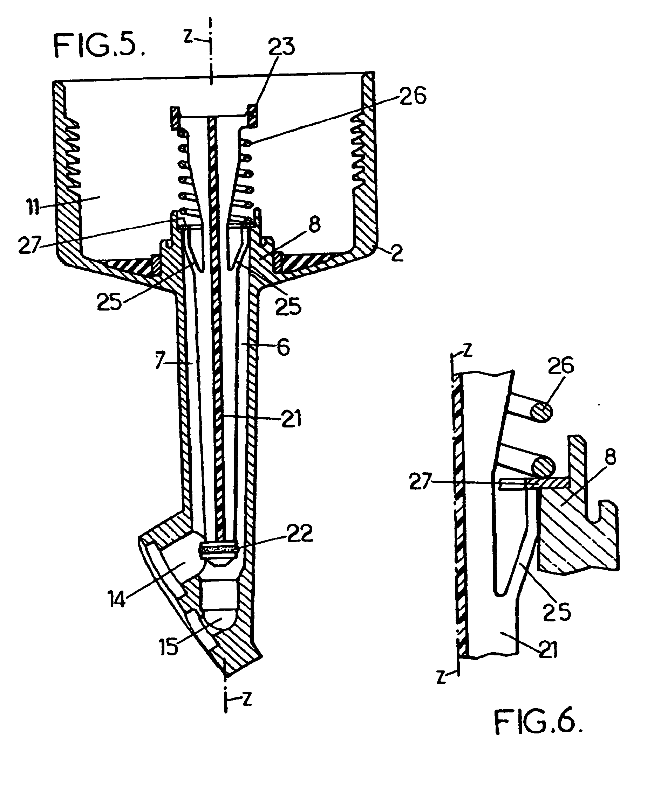

Grâce à ces dispositions, comme représenté sur les figures 5 et 6, lorsqu'on dévisse le couvercle 9 en enlevant simultanément l'insert filtrant 16, le ressort 26 déplace l'obturateur 21 vers le haut, de sorte que le bouchon 22 qui forme l'extrémité inférieure de l'obturateur ouvre le canal de purge, ce qui permet de vider la chambre de filtration 11 du liquide qu'elle contient.

De plus, au cours du mouvement d'enlèvement du couvercle 9 et de l'insert filtrant 16, les doigts élastiques 25 de l'obturateur viennent en butée sous la collerette rigide 27, de sorte que l'obturateur 21 reste fixé à l'embase 2.

Lorsque après la vidange du circuit d'huile du véhicule, on remet en place un nouvel insert filtrant 16, cet insert s'emboîte sur la bague 23 formant extrémité supérieure de l'obturateur 21 et lors du vissage du couvercle 9, le bouchon 22 de l'obturateur s'engage à nouveau dans le conduit de vidange 15 en fermant ce conduit.

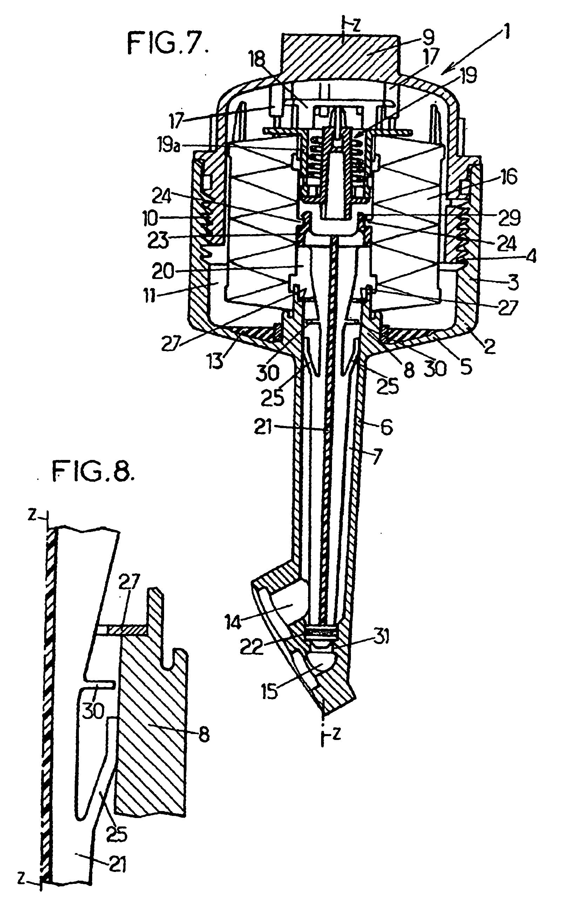

La deuxième forme de réalisation de l'invention, qui est représentée sur les figures 7 et 8, est similaire à la première forme de réalisation décrite ci-dessus, de sorte qu'elle ne sera pas décrite en détail ci-après.

Cette deuxième forme de réalisation de l'invention se distingue de la première forme de réalisation par les points suivants :
- le ressort 26 est supprimé,
- la partie supérieure de l'obturateur 21 est prolongée vers le haut par au moins deux crochets de clipsage 29 qui sont adaptés pour s'engager de façon réversible sur la collerette intérieure 24 de l'insert filtrant de façon à accrocher l'obturateur 21 audit insert filtrant,
- l'obturateur 21 comporte en outre au moins deux doigts flexibles élastiques 30 qui s'étendent radialement et qui sont disposés au-dessous de la collerette 27 lorsque le filtre est en position d'utilisation,
- et le canal de purge 15 comporte une butée intérieure, constituée par exemple par un rétrécissement 31.

Dans cette deuxième forme de réalisation de l'invention, lorsqu'on enlève le couvercle 9 et l'insert filtrant 16, on tire l'obturateur 21 vers le haut grâce aux clipsage de l'obturateur sur la collerette intérieure 24 de l'insert filtrant, ce qui ouvre le conduit de vidange 15.

Au cours de ce mouvement, les doigts flexibles 30 de l'obturateur s'effacent élastiquement lors de leur passage sur la collerette rigide 27, puis les doigts de clipsage 29 se dégagent de la collerette intérieure 24 de l'insert filtrant lorsque les doigts de butée 25 de l'obturateur viennent en butée sous la collerette rigide 27.

L'obturateur est ensuite maintenu en position ouverte par appui des doigts flexibles 30 sur la collerette 27.

Lorsqu'on remet en place un nouvel insert filtrant 16 dans le filtre, les doigts de clipsage 29 de l'obturateur se clipsent sur la collerette intérieure 24 de ce nouvel insert filtrant et ledit insert filtrant repousse l'obturateur 21 vers le bas jusqu'à ce que le bouchon 22 ferme à nouveau le canal de purge 15.

Au cours de ce mouvement, les doigts flexibles 30 de l'obturateur s'effacent à nouveau élastiquement lors de leur passage sur la collerette rigide 27.

De plus, le mouvement vers le bas de l'obturateur 21 est limité par le rétrécissement 31 du canal de purge, ce qui garantit le bon clipsage des doigts élastiques 29 sur la collerette intérieure 24 de l'insert filtrant. On notera toutefois qu'il serait éventuellement possible d'omettre le rétrécissement inférieur 31 du canal de purge, à condition de concevoir les crochets de clipsage 29 de telle sorte qu'ils puissent se clipser sur la collerette 24 de l'insert filtrant avec une relativement faible force, et qu'ils nécessitent une force plus importante pour se dégager de ladite collerette 24 : ce résultat peut être obtenu notamment en dotant ces crochets d'une face supérieure en forme de rampe de relativementfaible pente par rapport à l'axe central Z et d'une surface inférieure en forme de rampe de plus forte pente par rapport à l'axe central Z.

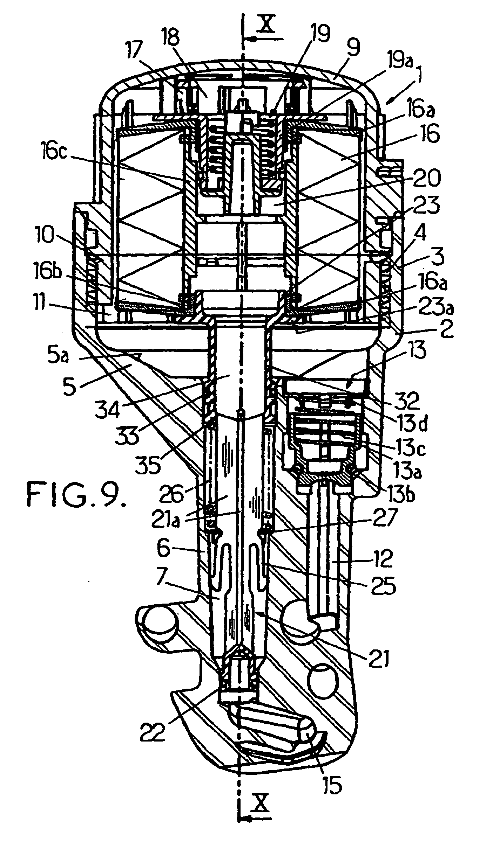

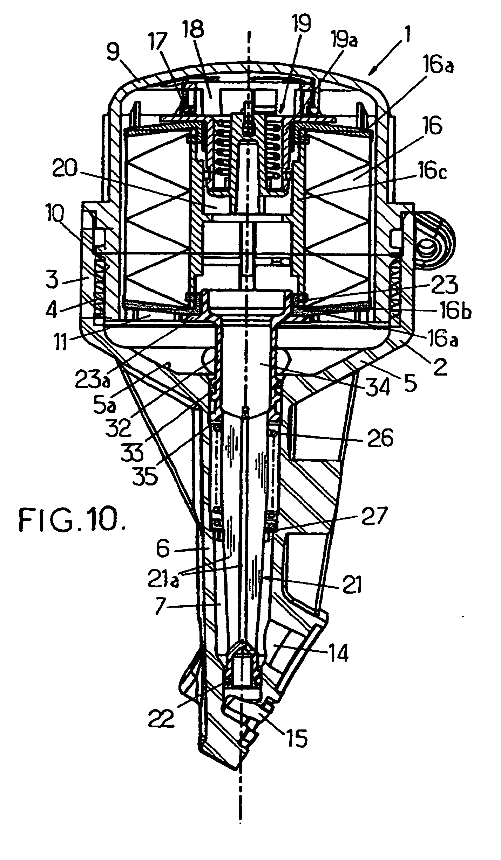

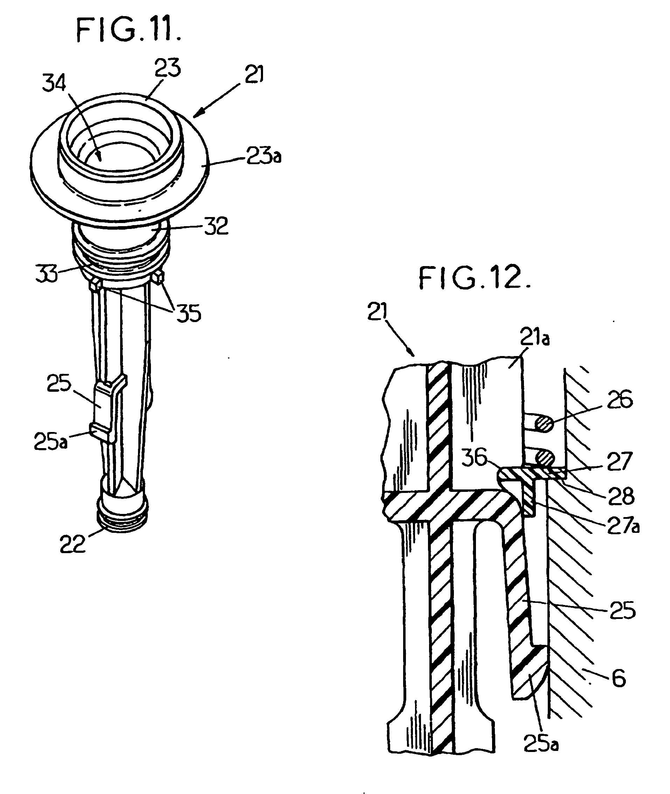

la troisième forme de réalisation, représentée sur les figures 9 à 12, est similaire à la première forme de réalisation décrite ci-dessus, de sorte que ladite troisième forme de réalisation ne sera pas décrite en détail ci-après.

Cette troisième forme de réalisation se distingue de la première forme de réalisation par les points suivants :
- le fonds 5 de l'embase ne comporte pas d'embout tubulaire 8, mais présente au contraire une surface intérieure 5a en forme d'entonnoir convergeant vers le bas jusqu'au conduit 7,
- le clapet d'entrée 13 n'est pas constitué par une simple membrane souple, mais comprend un organe de clapet 13a sollicité vers un siège de clapet 13b au moyen d'un ressort 13c qui s'appuie sur un support métallique ajouré 13d emboîté à l'extrémité supérieure de l'entrée de liquide 12,
- la bague supérieure 23 de l'obturateur est emboîtée avec étanchéité dans le flasque inférieure 16a de l'insert filtrant 16, lequel flasque est réalisé par exemple en une matière synthétique telle que du "hot melt" : avantageusement, la partie inférieure de la bague 23 se prolonge radialement vers l'extérieur par une collerette 23a prenant appui sous le flasque inférieure 16a de l'insert filtrant, et le flasque inférieur 16a se prolonge vers le haut par un retour axial 16b interposé entre la bague 23 et l'armature intérieure tubulaire ajourée 16d de l'insert filtrant,
- la bague 23 de l'obturateur se prolonge vers le bas par une partie tubulaire 32, jusqu'à un joint inférieur 33 emboîté avec étanchéité dans le conduit 7, cette partie tubulaire 32 se raccordant sans étanchéité aux nervures 21 a qui constituent la partie cruciforme de l'obturateur 21, de façon que ladite partie tubulaire 32 délimite un passage intérieur 34 qui fait communiquer le puits central 20 de l'insert filtrant avec le conduit 7,
- le ressort 26 prend appui sous des butées 35 en partie inférieure de la partie tubulaire 32,
- les doigts élastiques 25 de l'obturateur s'étendent en divergeant vers le bas, chacun jusqu'à une extrémité libre formant un crochet 25a orienté vers l'extérieur,
- la collerette 27 est engagée dans une encoche 36 ménagée entre l'une des nervures 21 a de l'obturateur et le doigt élastique 25 correspondant lorsque l'obturateur 21 est en position basse,
- la collerette 27, qui est par exemple moulée en matière plastique, présente avantageusement une couronne axiale 27a orientée vers le bas qui est adaptée pour buter contre les crochets 25a des doigts élastiques lorsque l'obturateur 21 est en position relevée.

Le fonctionnement de la troisième forme de réalisation est similaire au fonctionnement de la première forme de réalisation, si ce n'est que le relèvement de l'obturateur 21 implique un fléchissement des doigts élastiques 25 vers l'intérieur lors de leur passage sur la collerette 27.

## Revendications

1. Filtre à liquide pour moteur à combustion interne, comportant :
- une embase (2) qui présente un axe central (Z),
- un couvercle (9) adapté pour être fixé sur l'embase en délimitant avec celle-ci une chambre de filtration (11) fermée,
- une entrée de liquide (12) communiquant avec la chambre de filtration,
- une sortie de liquide (14) communiquant avec la chambre de filtration,
- un insert filtrant amovible (16) interposé de façon étanche entre l'entrée et la sortie de liquide, cet insert filtrant étant centré sur l'axe central (Z) de l'embase et présentant un puits central (20) qui communique avec la sortie de liquide (14),
- un canal de purge (15) qui est ménagé dans l'embase (2) et qui s'étend vers le bas selon l'axe central (Z),
- et un obturateur (21) disposé sur l'axe central (Z) de l'embase et engagé dans le puits central (20) de l'insert filtrant, cet obturateur se présentant sous la forme d'une tige s'étendant entre une extrémité haute (23) et une extrémité inférieure (22) formant bouchon qui est adaptée pour s'engager dans le canal de purge (15) en fermant ce canal lorsque le couvercle est fermé avec l'insert filtrant (16) dans la chambre de filtration, ledit obturateur coopérant avec l'insert filtrant (16) de façon à ouvrir le canal de purge lorsque ledit insert filtrant est enlevé de la chambre de filtration,
**caractérisé en ce que** l'obturateur (21) est monté coulissant à mouvement perdu par rapport à l'embase (2) entre une position basse où ledit obturateur ferme le canal de purge (15) et une position de butée haute où ledit obturateur ouvre le canal de purge en permettant la vidange de la chambre de filtration (11),
**en ce que** l'obturateur (21) est, du côté de l'extrémité haute (23), emboîté de façon amovible dans le puits central (20) et l'insert filtrant (16) définit une butée dans le puits central (20) permettant à l'insert filtrant de pousser et de coopérer par butée avec l'extrémité haute (23) de l'obturateur (21), pour maintenir cet obturateur en position basse lorsque le couvercle (9) est fermé et que l'insert filtrant est dans la chambre de filtration (11),
et **en ce que** le filtre comporte en outre des moyens de dégagement (26, 29) pour relever l'obturateur (21) en position haute lorsque l'insert filtrant (16) est enlevé de la chambre de filtration.

2. Filtre selon la revendication 1, dans lequel les moyens de dégagement comprennent un ressort (26) qui est porté par l'embase (2) et qui sollicite l'obturateur (21) vers le haut, ce ressort étant adapté pour maintenir l'obturateur en position ouverte pendant que l'insert filtrant (16) est enlevé de la chambre de filtration.

3. Filtre selon la revendication 2, dans lequel le ressort (26) s'appuie sur une collerette rigide (27) qui est fixée sur l'embase (2), cette collerette coopérant par butée avec l'obturateur (21) pour définir la position de butée haute de cet obturateur.

4. Filtre selon la revendication 1, dans lequel les moyens de dégagement de l'obturateur comprennent un dispositif de fixation réversible (29) qui relie l'obturateur (21) à l'insert filtrant (16) par emboîtement avec frottement.

5. Filtre selon la revendication 4, dans lequel le dispositif de fixation réversible est un dispositif de clipsage (29).

6. Filtre selon la revendication 5, dans lequel le dispositif de clipsage comporte au moins deux crochets de clipsage (29) flexibles qui sont orientés radialement vers l'extérieur par rapport à l'axe central (Z) et qui sont adaptés pour coopérer par engagement mutuel avec au moins un relief annulaire (24) formé dans le puits central (20) ménagé dans l'insert filtrant (16).

7. Filtre selon l'une quelconque des revendications 4 à 6, dans lequel l'obturateur (21) comporte au moins un organe flexible (30) s'étendant vers l'extérieur et adapté pour reposer sur un élément formant butée (27) solidaire de l'embase de façon à maintenir l'obturateur en position ouverte pendant que l'insert filtrant (16) est enlevé de la chambre de filtration, cet organe flexible (30) étant adapté pour s'effacer élastiquement lors de son passage sur l'élément formant butée (27) lorsque l'obturateur (21) est déplacé entre ses positions haute et basse lors d'un montage ou d'un démontage de l'insert filtrant (16).

8. Filtre selon l'une quelconque des revendications précédentes, dans lequel l'obturateur (21) comporte au moins deux doigts élastiques de butée (25) divergeant vers le haut chacun jusqu'à une extrémité libre coopérant par butée avec une collerette annulaire (27) solidaire de l'embase, pour définir la position de butée haute de l'obturateur.

9. Filtre selon l'une quelconque des revendications précédentes, dans lequel l'extrémité supérieure (23) de l'obturateur est engagée dans le puits central (20) qui est ménagé dans l'insert filtrant pour permettre la sortie de liquide filtré, et ledit obturateur traverse un conduit (7) relié à la sortie de liquide (14) avant de pénétrer dans le canal de purge (15).

10. Filtre selon la revendication 9, dans lequel la chambre de filtration (11) est partiellement délimitée par un fond (5) convergeant vers le bas jusqu'au conduit (7) relié à la sortie de liquide.

11. Filtre selon l'une quelconque des revendications précédentes, dans lequel le couvercle (9) est vissé sur l'embase (2) par rotation autour de l'axe central (Z), la chambre de filtration (11) et l'insert filtrant (16) présentant chacun une forme générale circulaire de révolution centrée sur ledit axe central.

## Patentansprüche

1. Flüssigkeitsfilter für eine Brennkraftmaschine, mit:
- einem Aufnehmer (2) mit einer Mittelachse (Z),
- einem Deckel (9), welcher dazu geeignet ist, am Aufnehmer befestigt zu werden und dabei mit diesem eine geschlossene Filterkammer (11) zu begrenzen;
- einem mit der Filterkammer verbundenen Flüssigkeitseinlass (12);
- einem mit der Filterkammer verbundenen Flüssigkeitsauslass (14);
- einem abnehmbaren Filtereinsatz (16), das abgedichtet zwischen Flüssigkeitseinlass und Flüssigkeitsauslass angeordnet ist, wobei dieses Filtereinsatz auf die Mittelachse (Z) des Aufnehmers zentriert ist und einen zentralen Schacht (20) aufweist, welcher mit dem Flüssigkeitsauslass (14) verbunden ist;
- einem Entleerungskanal (15), welcher im Aufnehmer (2) gebildet ist und sich nach unten nach der Mittelachse (Z) erstreckt; und
- einem Verschlussorgan (21), welches auf der Mittelachse (Z) des Aufnehmers angeordnet ist und in den zentralen Schacht (20) des Filtereinsatz greift, wobei dieses Verschlussorgan die Form einer Stange hat, welche sich zwischen einem oberen Ende (23) und einem unteren, einen Stopfen bildenden Ende (22), das geeignet ist, in den Entleerungskanal (15) einzudringen und dabei diesen Kanal zu verschließen, wenn der Deckel mit dem Filtereinsatz (16) in der Filterkammer geschlossen ist,
wobei dieses Verschlussorgan derart mit dem Filtereinsatz (16) zusammenwirkt, dass der Entleerungskanal geöffnet wird, wenn der genannte Filtereinsatz aus der Filterkammer entnommen wird,
dadurchgekennzeichnet, dass
- das Verschlussorgan (21) verschiebbar mit Leerlauf in Bezug auf den Aufnehmer (2) zwischen einer unteren Stellung, bei der das genannte Verschlussorgan den Entleerungskanal (15) verschließt, und einer oberen Anschlagstellung, bei der das genannte Verschlussorgan den Entleerungskanal öffnet und dabei die Entleerung der Filterkammer (11) ermöglicht, montiert ist,
- das Verschlussorgan (21) am oberen Ende (23) abnehmbar in den zentralen Schacht (20) gesteckt ist und der Filtereinsatz (16) im zentralen Schacht (20) einen Anschlag definiert, so dass der Filtereinsatz (16) durch Anschlagen und durch Drucken mit dem oberen Ende (23) des Verschlussorgans (21) zusammenwirkt, um dieses Verschlussorgan in der unteren Stellung zu halten, wenn der Deckel (9) geschlossen ist und der Filtereinsatz sich in der Filterkammer (11) befindet, und
- der Filter zudem Mittel zum Lösen (26, 29) aufweist, um das Verschlussorgan (21) in die obere Stellung anzuheben, wenn der Filtereinsatz (16) aus der Filterkammer entnommen wird.

2. Filter nach Anspruch 1, bei dem die Mittel zum Lösen eine Feder (26) enthalten, die vom Aufnehmer {2) getragen wird und das Verschlussorgan nach oben belastet, wobei diese Feder dazu geeignet ist, das Verschlussorgan in offener Stellung zu halten, während der Filtereinsatz (16) aus der Filterkammer entnommen ist.

3. Filter nach Anspruch 2, bei dem die Feder (26) sich auf einem starren Ansatz (27) abstützt, welcher am Aufnehmer (2) befestigt ist, wobei dieser Ansatz durch Anschlagen mit dem Verschlussorgan (21) zusammenwirkt, um die obere Anschlagstellung dieses Verschlussorgans zu definieren.

4. Filter nach Anspruch 1, bei dem die Mittel zum Lösen des Verschlussorgans eine Vorrichtung zur reversiblen Befestigung (29) enthalten, welche das Verschlussorgan (21) mit dem Filtereinsatz (16) reibschlüssig verbindet.

5. Filter nach Anspruch 4, bei dem die Vorrichtung zur reversiblen Befestigung eine Clipvorrichtung (29) ist.

6. Filter nach Anspruch 5, bei dem die Clipvorrichtung mindestens zwei flexible Cliphaken (29) aufweist, welche in Bezug auf die Mittelachse (Z) radial nach außen gerichtet sind und dazu geeignet sind, durch beiderseitiges Greifen mit mindestens einer ringförmigen Erhebung (24) zusammenzuwirken, welche in dem im Filtereinsatz (16) gebildeten zentralen Schacht (20) ausgebildet ist.

7. Filter nach einem der Ansprüche 4 bis 6, bei dem das Verschlussorgan (21) mindestens ein flexibles Organ (30) aufweist, welches sich nach außen erstreckt und dazu geeignet ist, auf einem Element zu ruhen, welches einen mit dem Aufnehmer fest verbundenen Anschlag (27) bildet, so dass das Verschlussorgan in der offenen Stellung gehalten wird, während der Filtereinsatz (16) aus der Filterkammer entnommen ist, wobei dieses flexible Organ (30) dazu geeignet ist, beim Vorbeistreifen an dem einen Anschlag (27) bildenden Element elastisch zu weichen, wenn das Verschlussorgan (21) beim Einbau oder beim Ausbau des Filtereinsatzes (16) zwischen seiner oberen und seiner unteren Stellung bewegt wird.

8. Filter nach einem der vorhergehenden Ansprüche, bei dem das Verschlussorgan (21) mindestens zwei elastische Anschlagfinger (25) aufweist, welche sich nach oben jeweils bis zu einem freien Ende auseinander spreizen, welches durch Anschlagen mit einem ringförmigen Ansatz (27) zusammenwirkt, welcher mit dem Aufnehmer fest verbunden ist, um die obere Anschlagstellung des Verschlussorgans zu definieren.

9. Filter nach einem der vorhergehenden Ansprüche, bei dem das obere Ende (23) des Verschlussorgans in den zentralen Schacht (20) greift, welcher im Filtereinsatz gebildet ist, um den Austritt der filtrierten Flüssigkeit zu ermöglichen, und das genannte Verschlussorgan eine mit dem Flüssigkeitsauslass (14) verbundene Leitung (7) durchquert, bevor es in den Entleerungskanal (15) eindringt.

10. Filter nach Anspruch 9 , bei dem die Filterkammer (11) teilweise von einem Boden (5) begrenzt ist welcher nach unten bis zu der mit dem Flüssigkeitsauslass verbundenen Leitung (7) koknvergiert.

11. Filter nach einem der vorhergehenden Ansprüche, bei dem der Deckel (9) auf dem Aufnehmer (2) durch eine Drehbewegung um die Mittelachse (Z) verschraubt ist, wobei die Filterkammer (11) und der Filtereinsatz (16) jeweils eine im wesentlichen kreisförmige, an der zentralen Achse zentrierte Rotationsform haben.

## Claims

1. Liquid filter with automatic purge for combustion engine comprising:
- a base (2) which has a central axis (Z),
- a cover adapted to be fixed on the base forming with the latter the boundary of a closed filtration chamber (11),
- a liquid inlet (12) connected to the chamber,
- a liquid outlet (14) connected to the filtration chamber,
- a detachable filtering insert (16) interposed in an impermeable way between the liquid inlet and outlet wherein this filtering insert is centred on the central axis (Z) of the base and has a central hole (20) which is connected to the liquid outlet (14),
- a purge channel (15) which is arranged in the base (2) and which extends towards the bottom following the central axis (Z),
- and an obturator (21) arranged on the central axis (Z) of the base and engaged in the central hole (20) of the filtering insert wherein this obturator is in the form of a rod extending between an upper end (23) and a lower end (22) forming a plug which is adapted to engage in the purge channel (15) closing this channel when the cover is closed with the filtering insert (16) in the filtration chamber wherein the said obturator cooperates with the filtering insert (16) in such a way as to open the purge channel when the said filtering insert is removed from the filtration chamber,
**characterised in that**
the obturator (21) is mounted in such a way as to slide with lost movement in relation to the base (2) between a low position where the said obturator closes the purge channel (15) and a high abutment position where the said obturator opens the purge chamber allowing the emptying of the filtration chamber (11);
**in that** the obturator (21) is engaged at the upper end (23) in a moveable way in the central hole (20) and the filtering insert (16) defines an abutment in the central hole (20) so as to push and cooperate through abutment with the upper end (23) of the obturator (21), in order to maintain this obturator in low position when the cover (9) is closed and the filtering insert is in the filtration chamber (11); and **in that**
the filter also comprises means of disengagement (26, 29) in order to return the obturator (21) to high position when the filtering insert (16) is removed from the filter chamber.

2. Filter according to claim 1, in which the means of disengagement include a spring (26) which is supported by the base (2) and which acts upon the obturator (21) to move it upwards wherein this spring is adapted in order to maintain the obturator in open position when the filtering insert (16) is removed from the filtration chamber.

3. Filter according to claim 2, in which the spring (26) presses on a rigid collar (27) which is fixed on the base (2) wherein this collar cooperates through abutment with the obturator (21) in order to define the position of high abutment of this obturator.

4. Filter according to claim 1, in which the means of disengagement of the obturator include a reversible fixing device (29) which connects the obturator (21) to the filtering insert (16) through fitting with friction.

5. Filter according to claim 4, in which the reversible fixing device is a clipping device.

6. Filter according to claim 5, in which the clipping device has at least two flexible clipping hooks (29) which are radially oriented towards the exterior in relation to the central axis (Z) and which are adapted in order to cooperate through mutual engagement with at least one annular relief (24) formed in the central hole (20) arranged in the filtering insert (16).

7. Filter according to one of the claims 4 to 6, in which the obturator (21) includes at least one flexible element (30) extending towards the exterior and adapted to rest on an element forming solid abutment (27) in respect of the base in such a way as to maintain the obturator in open position while the filtering insert (16) is removed from the filtration chamber wherein this flexible element (30) is adapted in order to diminish elastically during its passage on the element forming abutment (27) when the obturator (21) is moved between its high and low positions during assembly or dismantling of the filtering insert (16).

8. Filter according to one of the preceding claims, in which the obturator (21) has at least two elastic abutment

9. Filter according to one of the preceding claims,
in which the higher extremity (23) of the obturator is engaged in a central hole (20) which is arranged in the filtering insert in order to allow the outlet of filtered liquid and the said obturator crosses a pipe (7) connected to the liquid outlet (14) before penetrating in the purge channel (15).

10. Filter according to claim 9 wherein the filtration chamber (11) is partially delimited by a bottom (5) converging downwardly as far as the pipe (7) connected to the liquid outlet.

11. Filter according to one of the preceding claims, in which the cover (9) is screwed to the base (2) through rotation around the central axis (Z) wherein the filtration chamber (11) and the filtering insert (16) each have a general circular form with rotation centred on the said central axis.
